# EUROPÄISCHE PATENTSCHRIFT

(11) **EP 1 381 805 B1**
(45) Veröffentlichungstag und Bekanntmachung des Hinweises auf die Patenterteilung: **25.08.2004**
(21) Anmeldenummer: 02740272.6
(22) Anmeldetag: 22.04.2002
(51) Int. Cl.: F16L 19/02

(54) **ANSCHLUSSELEMENT FÜR ROHRE UND VERFAHREN ZUM ANSCHWEISSEN EINES ANSCHLUSSELEMENTS AN EIN ROHRENDE**
CONNECTING ELEMENT FOR PIPES AND METHOD FOR WELDING A CONNECTING ELEMENT ONTO THE END OF A PIPE
ELEMENT DE RACCORDEMENT DESTINE A DES TUYAUX ET PROCEDE DE SOUDAGE D'UN ELEMENT DE RACCORDEMENT A UNE EXTREMITE DE TUYAU

(30) Priorität: 20.04.2001 DE 20106919 U; 07.09.2001 DE 10144039
(43) Veröffentlichungstag der Anmeldung: 21.01.2004
(73) Patentinhaber: Avit Hochdruck-Rohrtechnik GmbH, 45141 Essen (DE)
(72) Erfinder: WASMUTH, Ernst, A., 45141 Essen (DE)
(74) Vertreter: Kreutzer, Ulrich, Dipl.-Phys.
(86) Internationale Anmeldenummer: PCT/DE2002/001466
(87) Internationale Veröffentlichungsnummer: WO 2002/085606

(56) Entgegenhaltungen:
- DE-A- 19 855 795
- DE-U- 1 960 933
- US-A- 5 123 678

## Beschreibung

### TECHNISCHES GEBIET DER ERFINDUNG

Die Erfindung betrifft ein Anschlußelement für Rohre und ein Verfahren zum Anschweißen eines Anschlußelements an ein Rohrende. Dabei ist das Anschlußelement zum Anschweißen an eine kreisringförmige, ggf. angefaste Stirnfläche eines Rohres vorgesehen. Insbesondere betrifft die Erfindung ein Anschlußelement mit einer konischen Dichtfläche, die beim Verbinden des Rohres mit anderen Bauteilen, wie z.B. anderen Rohren, Armaturen, Schläuchen und dergleichen, mit einer zu ihr zumindest partiell komplementären Dichtfläche in einem Verbindungselement, wie insbesondere einem in DIN EN ISO 8434-1 genannten Schraub- oder Schweißstutzen, zusammenwirkt.

### HINTERGRUND DER ERFINDUNG

Anschlußelemente der hier in Frage stehenden Art sind bekannt, z.B. aus der DE 1 960 933 U1. Sie dienen dazu, zusammen mit weiteren Bauteilen, wie insbesondere einem Schraub- bzw. Schweißstutzen, einer Überwurfmutter und einer ringförmigen Dichtung extrem beanspruchbare dichte Verbindungen (wie sie z.B. bei Hochdruckleitungen benötigt werden) von Rohren mit anderen Bauelementen wie z.B. weiteren Rohren, Armaturen, Schläuchen etc. zu ermöglichen.

Dabei hat sich das aus der genannten DE 1 960 933 U1 bekannte Anschlußelement in der Praxis seit vielen Jahren ausgesprochen bewährt. Allerdings ist das Anschweißen eines solchen Anschlußelementes mit einer kreisringförmigen Stirnfläche an eine ebensolche Stirnfläche am Ende eines Rohres nicht trivial und muß von qualifizierten Fachkräften ausgeführt werden.

Wird dabei das normale Gasschweißen angewandt, entsteht durch Abbrand von im Material des Anschlußelementes und des Rohres, die bei den hier betroffenen Rohrleitungen im Regelfall beide aus Stahl bestehen, enthaltenen Legierungselementen sowohl an der Rohraußen- als auch an der Rohrinnenseite Zunder, wobei der an der Rohrinnenseite entstehende Zunder im Regelfall durch eine aufwendige nachträgliche Beizung (üblicherweise mit einer 13%igen Salzsäurelösung) gelöst und anschließend herausgespült werden muß, da die Zunderpartikel ansonsten bei Benutzung des Rohres z.B. im Rahmen einer Hochdruck-Hydraulikölleitung zu Beschädigungen von Bauteilen wie z.B. Hydraulikzylindern führen könnten.

Um die Zunderbildung zu vermeiden, wird daher zum Anschweißen des Anschlußelementes an das Rohrende meist das sog. Wolfram-Inertgas-Schweißverfahren (WIG-Schweißverfahren) unter Schutzgasatmosphäre verwandt. Dabei muß allerdings darauf geachtet werden, daß beim Verschweißen weder Schweißgut noch Schweißperlen in das Rohrinnere gelangen. Anschließend muß im Regelfall die Schweißstelle zumindest gesäubert, oft aber auch noch beigeschliffen werden.

Die bekannten Schweißverfahren benötigen nicht nur qualifiziertes Fachpersonal, sie sind auch zeitaufwendig und damit besonders kostenintensiv.

Daneben sind schweißlose Rohrverbindungen in Form sogenannter Bördel-Verschraubungen bekannt. Bei diesen wird ein Rohrleitungsende mit einer Maschine umgeformt (gebördelt) und eine Wulst aufgestaucht, welche eine Schulter für eine zuvor aufgesteckte Überwurfmutter bildet. Da zum Aufstauchen der Wulst sehr hohe Kräfte notwendig sind und das Rohr gegen die Stauchrichtung eingespannt werden muß, entstehen beim Aufstauchen tiefe Spannriefen am äußeren Rohr. Diese Spannriefen können die Fasern im Rohr verletzen, was dann insbesondere bei Hochdruck-Hydrauliksystemen, bei denen die Rohrleitungen oft erheblichen dynamischen Belastungen ausgesetzt sind, zum Bruch der Rohrleitung führen kann.

Zudem entsteht durch das Aufstauchen im Rohrinneren eine Hohlkehle, in der sich Schmutz ansammeln kann, was zu einer verstärkten Korrosion im Rohrinneren führen kann.

Problematisch ist schließlich auch die Tatsache, daß beim Bördeln das Rohr kalt verformt und der Faserverlauf nicht angeschnitten wird, was ebenfalls zu einem Reißen der Fasern im Werkstoff und damit einem leichteren Rohrbruch führen kann.

Bördel-Verschraubungen sind daher insbesondere bei sehr hohen Betriebsdrücken und bei Rohrleitungssystemen, an denen starke Vibrationen auftreten können, wie bei bestimmten Hydrauliksystemen, nur bedingt geeignet.

### OFFENBARUNG DER ERFINDUNG

Der Erfindung liegt zum einen die Aufgabe zugrunde, ein Anschlußelement anzugeben, das in besonders einfacher, schneller und kostengünstiger Weise an einem Rohrende mit einer im wesentlichen kreisringförmigen Stirnfläche anschweißbar ist und das zusammen mit weiteren Bauelementen wie z.B. einer Überwurfmutter und einem Schraubstutzen eine auch bei extremen Drücken und Temperaturschwankungen dichte Verbindung des Rohres mit anderen Bauelementen ermöglicht.

Des weiteren liegt der Erfindung die Aufgabe zugrunde, ein Verfahren zum Anschweißen eines Anschlußelementes an eine kreisringförmige Stirnfläche eines Rohres anzugeben, das in besonders einfacher, schneller und kostengünstiger auch von Personal ohne Schweißerfahrung ausgeführt werden kann.

Hinsichtlich eines Anschlußelementes wird die Aufgabe gelöst von einem Anschlußelement der eingangs genannten Art nach Anspruch 1 und von einem Verfahren nach Anspruch 13.

Ein solches Anschlußelement hat den großen Vorteil, daß es durch Reibschweißen an ein Ende eines Rohres angeschweißt werden kann. Beim Reibschweißen werden die zu verbindenden Bauteile an ihren Verbindungsflächen durch Gegeneinanderreiben lokal bis in den plastischen Bereich erhitzt und anschließend durch einen kurzen Druckstoß miteinander verbunden. Die zur Ausführung des Reibschweißens benötigte Maschine ist sehr einfach in der Bedienung und erfordert kein hochqualifiziertes Personal wie das WIG-Schweißen. Zudem ist das Reibschweißverfahren deutlich schneller als das WIG-Schweißverfahren.

Ein weiterer Vorteil ist, daß die zum Anschweißen eines erfindungsgemäßen Anschlußelementes an ein Rohr benötigte Zeit bei Stahlrohren mit üblichen Außendurchmessern von bis zu etwa 50 mm im Regelfall so kurz ist, daß es nicht zur Bildung von Zunder kommen kann, wodurch vorteilhaft Nacharbeiten wie z.B. Beizen entfallen können.

Erste Versuche haben gezeigt, daß das Anschweißen eines erfindungsgemäßen Anschlußelementes an ein Rohrende mittels des dank der Erfindung einsetzbaren Reibschweißverfahrens einschließlich aller erforderlichen Vorarbeiten etwa fünf bis sieben Minuten schneller ausgeführt werden kann als das vergleichbare Anschweißen des bekannten Anschlußelementes an ein Rohr.

Bei einer bevorzugten Ausführungsform der Erfindung ist vorgesehen, daß sich der Reibbereich bei bestimmungsgemäßer Ausrichtung zur Stimfläche des Rohres, an dem das Anschlußelement angeschweißt werden soll, zu der Stirnfläche hin verjüngt. Dies hat verschiedene Vorteile. So liegt zum Beginn des Reibschweißens nur eine verhältnismäßig geringe Fläche des Reibbereichs an der Stirnfläche des Rohres an, so daß die Maschine ohne großen Kraftaufwand Anlaufen kann, gleichwohl aber durch den auf die geringe Fläche konzentrierten Druck im Kontaktbereich eine erhebliche Reibung und damit Erwärmung entsteht, die zu einer gewünschten gleichmäßigen Erhitzung der miteinander zu verbindenden Teile führt.

Daneben stellt die sich verjüngende Form sicher, daß die beim Gegeneinanderpressen der Teile nach dem Erhitzen rohrinnen- und rohraußenseitig ggf. entstehenden Schweißwülste nur wenig vorstehen und insbesondere eine ggf. rohrinnenseitig entstehende Schweißwulst den freien Durchmesser der Rohrleitung nicht übermäßig verringert und somit kein Strömungshindernis bildet.

Als zweckmäßig hat es sich erwiesen, wenn der sich verjüngende Reibbereich zwei ringförmige Seitenwangen aufweist, die in einem Winkel von etwa 90° bis 160°, vorzugsweise von etwa 120° zueinander verlaufen. Dabei kann der Winkel in Abhängigkeit von der Wandstärke des anzuschweißenden Rohres gewählt werden und bei besonders dickwandigen Rohren auch stumpfer, bei dünnwandigen Rohren auch spitzer sein, wobei die übliche Wandstärke der hier in Frage stehenden Rohre zwischen etwa 1,0 und 5,0 mm liegt.

Ferner hat es sich als vorteilhaft erwiesen, wenn der Reibbereich eine abgeflachte oder abgerundete Spitze besitzt. Ist die Spitze abgerundet, so haben sich Radien der Rundung der Spitze besonders bewährt, die etwa 1 bis 10%, vorzugsweise etwa 2,5% des Außendurchmessers des anzuschweißenden Rohres betragen. Bei anzuschweißenden Rohren mit einem typischen Außendurchmesser von 16 mm kann der Radius der Rundung des Reibbereichs bei etwa 0,4 mm liegen.

Bei einer besonders bevorzugten Ausführungsform der Erfindung ist der Reibbereich im Inneren des Anschlußelementes ausgebildet, was eine ganze Reihe von Vorteilen hat, von denen die "saubere" Optik nur der unbedeutendste ist. Ein Beischleifen der Schweißstelle erübrigt sich bei dieser Ausführungsform.

Ist der Reibbereich im Inneren des Anschlußelementes ausgebildet, so kann vorteilhaft ebenfalls im Inneren des Anschlußelementes neben dem Reibbereich eine ringförmig umlaufende Aufnahme für eine beim Reibverschweißen des Anschlußelementes mit einem Rohr auf der Rohraußenseite entstehende Schweißwulst vorgesehen sein. Diese Aufnahme verhindert, daß das verflüssigte und beim Drücken des Anschlußelementes gegen das Rohr quer zur Druckrichtung gedrückte Material mangels anderweitigen Raumes in das Rohrinnere gedrückt wird und so den Innnendurchmesser verkleinert.

Zweckmäßigerweise ist die Aufnahme für die Schweißwulst so ausgebildet, daß ihr maximaler Außendurchmesser größer ist als der Durchmesser einer in dem Anschlußelement gebildeten kreisförmigen Aufnahmeöffnung für ein anzuschweißendes Rohr. Nach dem Erkalten der Schweißwulst wird auf diese Weise dann eine zusätzliche formschlüssige Verbindung von Anschlußelement und Rohr gebildet, die die Schweißnaht zusätzlich entlastet.

Dabei sollte der kleinste Durchmesser der in dem Anschlußelement gebildeten kreisförmigen Aufnahmeöffnung für ein anzuschweißendes Rohr etwas größer sein als der Außendurchmesser des anzuschweißenden Rohres, so daß beim Reibverschweißen von Anschlußelement und Rohr tatsächlich nur der Reibbereich des Anschlußelementes mit dem Rohr in Kontakt tritt. Um wieviel der kleinste Durchmesser der Aufnahmeöffnung größer sein sollte als der Außendurchmesser des Rohres hängt von der Laufruhe der verwendeten Reibschweißmaschine ab. Bei den Maschinen der Anmelderin reichen bereits sehr geringe Toleranzen aus. So genügt eine Aufnahmeöffnung mit einem Durchmesser von 16,5 mm völlig für Rohre mit 16 mm Außendurchmesser.

Bei einer weiteren bevorzugten Ausführungsform ist die dem anzuschweißenden Rohr zugewandte Außenseite des Anschlußelementes als Auflagefläche zum Halten einer Überwurfmutter ausgebildet. Längere Stutzen wie sie bei dem aus dem Stand der Technik bekannten Anschlußelement notwendig sind, können entfallen. Zudem kann der Abschnitt des Anschlußelementes, dessen Außenseite als Auflagefläche zum Halten einer Überwurfmutter ausgebildet ist und der damit notwendigerweise einen größeren Außendurchmesser aufweisen muß als z.B. das Rohr vorteilhaft einen Doppelnutzen dadurch erfüllen, daß in diesem Abschnitt des Anschlußelementes die ggf. im Anschlußelement vorgesehen Aufnahme für die entstehende Schweißwulst ausgebildet wird.

Wenngleich das Anschlußelement je nach Anwendungsfall beliebig geformt sein kann, soll ein typisches hier in Frage stehendes Anschlußelemente zum Bilden von Schraubverbindungen nach DIN EN ISO 8434-1 dienen, so daß die dem anzuschweißenden Rohr abgewandte Außenseite des Anschlußelementes als konische Dichtfläche ausgebildet ist. In dieser Dichtfläche kann dann eine umlaufende Nut zur Aufnahme eines Dichtringes vorgesehen werden.

In verfahrensmäßiger Hinsicht wird zur Lösung der oben genannten Aufgabe ein Verfahren vorgeschlagen, bei welchem ein erfindungsgemäß ausgebildetes Anschlußelement an eine kreisringförmige Stirnfläche eines Rohres dadurch angeschweißt wird, daß das Anschlußelement und das Rohr derart in relative Rotation um die Mittelachse der kreisringförmigen Stirnfläche des Rohres zueinander versetzt werden, daß der Reibbereich des Anschlußelementes und die Stimfläche des Rohres aneinander reiben, bis sie sich auf die für eine Schweißverbindung notwendige Temperatur erhitzt haben, worauf die relative Rotation von Anschlußelement und Rohr zueinander gestoppt und Stirnfläche und Reibbereich gegeneinander gepreßt werden.

### KURZE BESCHREIBUNG DER ZEICHNUNGEN

- Fig. 1: zeigt eine teilweise geschnittene Seitenansicht eines erfindungsgemäßen Anschlußelementes.
- Fig. 2: zeigt eine teilweise geschnittene Seitenansicht verschiedener Bauelemente zum Herstellen einer Rohrverschraubung im unmontierten Zustand.
- Fig. 3: zeigt eine teilweise geschnittene Seitenansicht der Bauelemente gemäß Fig. 2 im montierten Zustand.

### BESCHREIBUNG BEVORZUGTER AUSFÜHRUNGSFORMEN

Im folgenden werden unter Bezug auf die Zeichnungen rein beispielhaft und nicht beschränkend ein Ausführungsbeispiel eines erfindungsgemäßen Anschlußelementes und eines erfindungsgemäßen Verfahrens beschrieben.

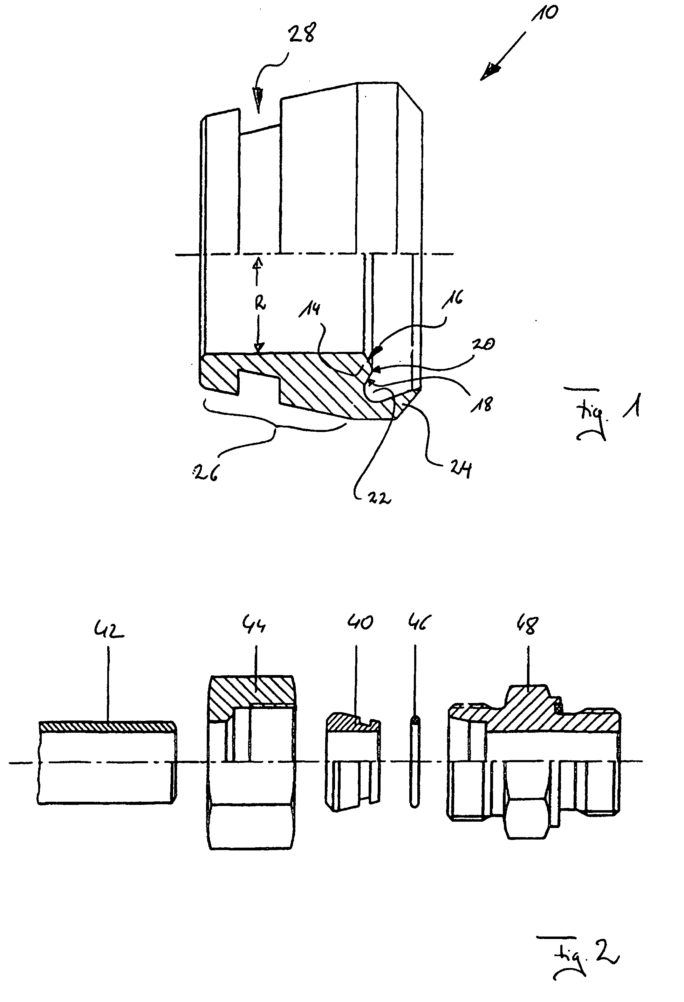

In der Fig. 1 ist ein in seiner Gesamtheit mit 10 bezeichnetes Anschlußelement zum Anschweißen an eine kreisringförmige Stirnfläche eines Rohres in teilweise geschnittener Seitenansicht, gesehen senkrecht zur Mittelachse 12 des bei diesem Ausführungsbeispiel rotationssymetrischen Anschlußelementes 10 gezeigt. Dabei sei bemerkt, daß unter dem Begriff "kreisringförmig" hier nicht etwa nur plane Stirnflächen verstanden werden. Die Stirnflächen können vielmehr beliebig konturiert, insbesondere auch nach außen oder innen gewölbt sein. Wichtig ist nur, daß die Stimflächen in der Projektion entlang der Achse, um die beim Reibschweißen Anschlußelement und Rohr relativ zueinander rotieren, wie plane Kreisring kreisrund und nicht etwa oval sind.

Das Anschlußelement 10 weist in seinem Inneren einen Bereich auf, der durch Reiben an einer Stirnfläche eines entsprechend dimensionierten Rohres derart bis in den plastischen Bereich hinein erhitzt werden kann, daß das Anschlußelement 10 mit einem entsprechenden Rohr im sog. Reibschweißverfahren verschweißt werden kann. Dieser speziell ausgeformte Bereich wird daher in dieser Anmeldung als Reibbereich 14 bezeichnet.

Der Reibbereich 14 ist bei diesem Ausführungsbeispiel beim bestimmungsgemäßen Einsetzen eines in Fig. 1 nicht gezeigten Rohres in das Anschlußelement 10 bzw. beim Aufsetzen des Anschlußelementes 10 auf ein Ende eines solchen Rohres zu der Stirnfläche des Rohres, mit der das Anschlußelement verschweißt werden soll, hin gewölbt und weist zwei Seitenwangen 16 und 18 auf, die bei diesem Ausführungsbeispiel in einem Winkel von etwa 120° zueinander verlaufen und im Bereich einer abgerundeten Spitze 20 ineinander übergehen.

Der freie Innenradius R des Anschlußelementes entspricht bei diesem Ausführungsbeispiel dem freien Innenradius eines anzuschließenden Rohres, wobei an dieser Stelle bemerkt sei, daß das Anschlußelement natürlich auch beliebige andere Innenkonturen aufweisen und z.B. als Reduzierstück ausgebildet sein kann.

Durch die Wölbung des Reibbereichs 14 ist nicht nur ein besonders vorteilhafter Ablauf des Reibschweißens gewährleistet, sondern auch eine Minimierung der beim Reibverschweißen des Anschlußelementes 10 mit einem Rohr an der Innenseite entstehenden Schweißwulst, so daß die Strömungen durch ein angeschweißtes Rohr und durch das Anschlußelement von der Schweißwulst praktisch nicht behindert werden, sofern überhaupt eine Schweißwulst entsteht.

Zur weiteren Minimierung einer rohrinnenseitig entstehenden Schweißwulst ist bei diesem besonders vorteilhaften Ausführungsbeispiel neben dem Reibbereich 14 eine ringförmig umlaufende Aufnahme 22 ausgebildet, in welche das beim Reibverschweißen verflüssigte und zunächst durch Fliehkräfte, dann durch Druckkräfte nach außen gepreßte Material von Anschlußelement und anzuschweißendem Rohr, das dann eine Schweißwulst bildet, hineintreten kann.

Das Anschlußelement weist an seinem bei bestimmungsgemäßer Ausrichtung von Anschlußelement und anzuschweißendem Rohr dem Rohr zugewandten Ende einen Schulterabschnitt 24 mit einer ringförmigen Außenflanke und einer ringförmigen Innenflanke auf.

Die Innenflanke des Schulterabschnitts 24 begrenzt eine kreisförmige Aufnahmeöffnung für ein anzuschweißendes Rohr. Wie in Fig. 1 zu erkennen, ist der Durchmesser dieser Aufnahmeöffnung für ein anzuschweißendes Rohr deutlich kleiner als der maximale Außendurchmesser der ringförmig umlaufenden Aufnahme 22 für die Schweißwulst. Entlang der Mittelachse 12 gesehen kann man also sagen, daß die Aufnahmeöffnung hinterschnitten ist, wobei sich ein Hinterschneidungswinkel zwischen 10° und 30°, vorzugsweise von etwa 20° zur Mittelachse 12 des Anschlußelementes bewährt hat.

Diese Ausführungsform hat nicht nur den Vorteil, daß auch bei größten Fliehkräften beim Reibverschweißen kein verflüssigtes Material von dem Rohr bzw. dem Anschlußelement abreißen und weggeschleudert werden kann, da sich solches Material in der Aufnahme 22 sammelt, sondern auch den Vorteil, daß das in der Aufnahme 22 erkaltete Material eine zusätzliche formschlüssige Verbindung mit der Innenflanke des hinterschnittenen Schulterabschnitts 24 eingeht, was die sich durch das Schweißen ergebende Schweißnaht zusätzlich entlastet.

Die Außenflanke des Schulterabschnitts 24 bildet eine Auflagefläche zum Halten einer Überwurfmutter. Die einem anzuschweißenden Rohr abgewandte Außenseite 26 des Anschlußelementes 10 ist als konische Dichtfläche ausgebildet und verfügt über eine umlaufende Nut 28 zum Aufnehmen eines hier nicht gezeigten Dichtringes.

Das Anschlußelement kann aus beliebigen, dem jeweiligen Anwendungsfall angepaßten Materialien vorzugsweise einstückig ausgebildet sein. Da das Anschlußelement 10 jedoch im Regelfall bei Hochdruck-Hydraulikölleitungen eingesetzt werden wird, wird es im Regelfall ebenso wie ein anzuschweißendes Rohr aus normalem Stahl bestehen. Als Materialien kommen jedoch auch Edelstähle und austenitische Werkstoffe sowie Materialien wie z.B. Messing, Titan, warmfeste Stähle und CuNiFer-Legierungen in Betracht.

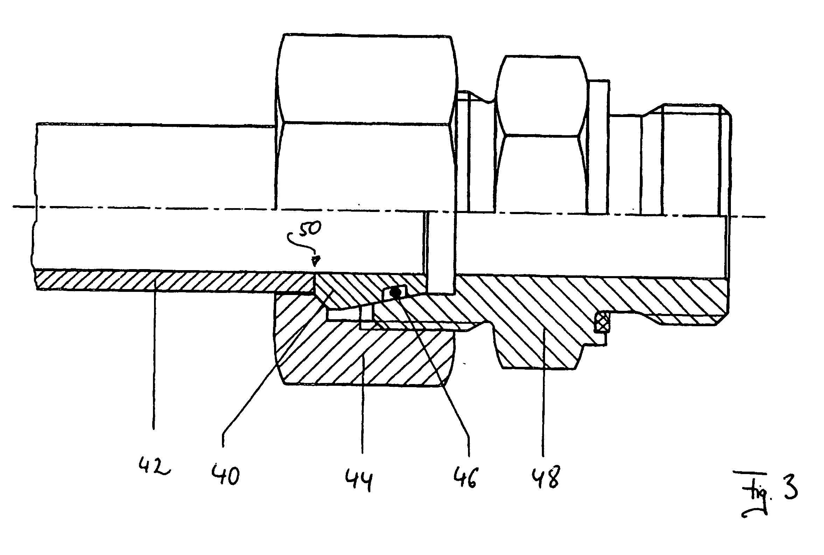

In der Fig. 2 sind die verschiedenen Bauteile zum Herstellen einer Rohrverschraubung unter Verwendung eines erfindungsgemäßen Anschlußelementes 40 gezeigt, wobei das Anschlußelement 40 im wesentlichen dem Anschlußelement 10 gemäß Fig. 1 entspricht. Dabei sei bemerkt, daß in dieser rein prinzipiellen Skizze die genaue Ausbildung des Reibbereichs des Anschlußelementes 40 nicht dargestellt ist.

Die weiter in dieser Figur gezeigten Bauteile sind: ein nur teilweise gezeigtes Rohr 42, eine Überwurfmutter 44, eine O-Ring-Dichtung 46 und ein sogenannter Einschraubstutzen 48 gemäß DIN EN ISO 8434-1.

Die Fig. 3 zeigt die Bauteile gemäß Fig. 2 im montierten Zustand.

Bei der Montage der gezeigten Verschraubung wird im ersten Verfahrensschritt das Anschlußelement 40 an dem Rohr 42 angeschweißt, und zwar mittels einer Reibschweißmaschine, die das Rohr und das Anschlußelement in schnelle Rotation relativ zueinander versetzt.

Dabei kann die Überwurfmutter 44 bereits zur Fixierung des Anschlußelementes 40 am sogenannten Reibschweißkopf der Maschine verwendet werden. Üblicherweise besitzt die Reibschweißmaschine eine Aufnahme mit einer Innenkontur, die zur Außenkontur des Anschlußelements 40 zumindest partiell komplementär ist und deren Außenkontur mit einem Gewinde versehen ist, das zum Innengewinde der Überwurfmutter 44 komplementär ist. Dadurch kann das Anschlußelement 40 mittels der Überwurfmutter 44 auf dem Reibschweißkopf fixiert werden.

Sodann wird das Rohr 42 in eine Spannvorrichtung eingelegt und fixiert. Beim Reibschweißen wird das mit einer bestimmten Drehzahl rotierende Anschlußelement 40 für eine vorbestimmte Zeit, die sogenannte Reibzeit, gegen das starre Rohrende mit einem bestimmten Druck, dem sogenannten Reibdruck, gepreßt. Nach der Reibzeit wird das Anschlußelement mit einem erhöhten Druck, dem sogenannten Stauchdruck, für eine bestimmte Mindestzeit, der sogenannten Stauchzeit, gegen das Rohrende gepreßt.

In Abhängigkeit vom Rohraußendurchmesser und der Wandstärke des Rohres werden der Reibschweißmaschine bestimmte Parameter für Drehzahl, Reibzeit, Reibdruck, Stauchzeit und Stauchdruck vorgegeben. Bei den üblichen hier in Frage stehenden Materialien und Abmessungen liegen: typische Drehzahlen zwischen etwa 10.000 und 25.000 U/min, typische Reibzeiten zwischen 100 und 1.000 Millisekunden, typische Reibdrücke zwischen 1,5 und 2,5 bar, typische Stauchzeiten zwischen 2 und 4 Sekunden, typische Stauchdrücke zwischen 3 und 5 bar. Besonders bewährt haben sich: Drehzahlen zwischen 22.000 und 24.000 U/min, Reibzeiten zwischen 200 und 300 Millisekunden, Reibdrücke zwischen 1,8 und 2,2 bar, Stauchzeiten zwischen 2,8 und 3,2 Sekunden, Stauchdrücke zwischen 3,8 und 4,2 bar.

Nach dem Anschweißen des Anschlußelementes 40 an das Rohr 42 kann eine Rohrverschraubung wie in Fig. 3 gezeigt dadurch hergestellt werden, daß das Rohr mit dem Anschlußelement 40 und aufgesetztem Dichtring 46 in einen Schraubstutzen 48 eingesetzt und dort mittels der Überwurfmutter 44 festgespannt wird.

Wie in Fig. 3 angedeutet liegt die zwischen Anschlußelement 40 und Rohr 42 gebildete Schweißnaht bei Verwendung eines Anschlußelementes gemäß Fig. 1 nicht nur innerhalb des Anschlußelementes, sondern auch innerhalb des von der Überwurfmutter 44 umschlossenen Bereichs, so daß die Schweißnaht doppelt gegen Aufplatzen gesichert ist.

Im Rahmen des Erfindungsgedankens sind zahlreiche Abwandlungen und Weiterbildungen möglich, die sich z.B. auf die Ausbildung der Kontur des Reibbereichs beziehen. So ist es z.B. möglich und insbesondere bei sehr großen Wandstärken auch zweckmäßig, statt des gezeigten einfach gewölbten Reibbereichs einen Reibbereich mit mehreren Wölbungen bzw. Rillen vorzusehen.

Erfindungswesentlich ist jedenfalls, daß das Anschlußelement derart ausgebildet ist, daß es durch Reibschweißen an einer Stirnfläche eines Rohres angeschweißt werden kann. Dabei sei an dieser Stelle betont, daß es natürlich auch möglich ist, die Stimfläche des anzuschweißenden Rohres entsprechend auszuformen und z.B. zu wölben. Da oftmals jedoch Rohrleitungen vor Ort abgelängt werden, wird es üblicherweise zweckmäßiger sein, die entsprechende Kontur im Anschlußelement vorzusehen, als das abgelängte Rohr zu verformen. Ein Anfasen der Stirnfläche des abgelängten Rohres ist jedoch auch vor Ort problemlos möglich und im Regelfall auch zweckmäßig.

## Patentansprüche

1. Anschlußelement (10) zum Anschweißen an eine kreisringförmige Stirnfläche eines Rohres, wobei
- eine dem Rohr, an dem das Anschlußelement angeschweißt werden soll, zugewandte Außenseite des Anschlußelementes als Auflagefläche zum Halten einer Überwurfmutter ausgebildet ist und wobei
- eine dem Rohr, an dem das Anschlußelement angeschweißt werden soll, abgewandte Außenseite (26) des Anschlußelementes als konische Dichtfläche ausgebildet ist,
**dadurch gekennzeichnet,**
- **daß** es einen durch Reibschweißen mit der Stirnfläche verschweißbaren ringförmigen, nachfolgend Reibbereich (14) genannten Bereich aufweist und
- **daß** der Reibbereich (14) im Inneren des Anschlußelementes ausgebildet ist.

2. Anschlußelement (10) nach Anspruch 1, **dadurch gekennzeichnet, daß** sich der Reibbereich (14) bei bestimmungsgemäßer Ausrichtung zur Stirnfläche des Rohres, an dem das Anschlußelement angeschweißt werden soll, zu der Stirnfläche hin verjüngt.

3. Anschlußelement (10) nach Anspruch 2, **dadurch gekennzeichnet, daß** der Reibbereich zwei ringförmige Seitenwangen (16, 18) aufweist, die in einem Winkel von etwa 90 bis 160°, vorzugsweise etwa 120° zueinander verlaufen.

4. Anschlußelement (10) nach Anspruch 2 oder 3, **dadurch gekennzeichnet, daß** der Reibbereich (14) eine abgeflachte oder vorzugsweise abgerundete Spitze (20) aufweist.

5. Anschlußelement (10) nach einem der Ansprüche 1 bis 4, **dadurch gekennzeichnet, daß** im Inneren des Anschlußelementes neben dem Reibbereich eine ringförmig umlaufende Aufnahme (22) für eine beim Reibverschweißen des Anschlußelementes mit einem Rohr auf der Rohraußenseite entstehenden Wulst vorgesehen ist.

6. Anschlußelement (10) nach Anspruch 5, **dadurch gekennzeichnet, daß** der maximale Außendurchmesser der ringförmig umlaufenden Aufnahme (22) für die Wulst größer ist als der Durchmesser einer in dem Anschlußelement gebildeten kreisförmigen Aufnahmeöffnung für ein Rohr, an dem das Anschlußelement angeschweißt werden soll.

7. Rohr mit einem angeschweißten Anschlußelement nach einem der Ansprüche 1 bis 6, **dadurch gekennzeichnet, daß** das Rohr und das Anschlußelement durch Reibschweißen miteinander verbunden wurden.

8. Rohrverbindung umfassend wenigstens ein Rohr mit einem durch Reibschweißen angeschweißten Anschlußelement nach einem der Ansprüche 1 bis 6, eine das Anschlußelement partiell umgreifende Überwurfmutter mit einem Gewinde und einen Schraubstutzen mit einem zum Gewinde der Überwurfmutter komplementären Gewinde.

9. Rohrverbindung nach Anspruch 8, **dadurch gekennzeichnet, daß** bei bestimmungsgemäßer Montage von Überwurfmutter und Schraubstutzen die zwischen Rohr und angeschweißtem Anschlußelement gebildete Schweißnaht in dem von der Überwurfmutter umgrenzten Bereich liegt.

10. Hochdruckrohrleitung umfassend eine Anzahl von Rohren, von denen zumindest eines mit einem Anschlußelement nach einem der Ansprüche 1 bis 6 durch Reibschweißen verbunden ist.

11. Mehrteiliges Verbindungssystem für Rohre, umfassend ein Anschlußelement nach einem der Ansprüche 1 bis 6, eine Überwurfmutter, einen Schraubstutzen und einen Dichtring.

12. Mehrteiliges Verbindungssystem nach Anspruch 11, zusätzlich umfassend eine vorzugsweise mobil einsetzbare Reibschweißmaschine zum Anschweißen von Anschlußelementen an Rohre.

13. Verfahren zum Anschweißen eines Anschlußelementes nach einem der Ansprüche 1 bis 6 an eine kreisringförmige Stirnfläche eines Rohres, **dadurch gekennzeichnet, daß** das Anschlußelement und das Rohr derart in relative Rotation um die Mittelachse der kreisringförmigen Stirnfläche zueinander versetzt werden, daß Reibbereich und Stirnfläche aneinander reiben bis sie sich auf die für eine Schweißverbindung notwendige Temperatur erhitzt haben, worauf die relative Rotation von Anschlußelement und Rohr zueinander gestoppt und Stirnfläche und Reibbereich gegeneinander gepreßt werden.

14. Verwendung des Reibschweißverfahrens zum Anschweißen eines Anschlußelementes nach einem der Ansprüche 1 bis 6 an ein Rohr.

## Claims

1. A connecting element (10) for welding to a circular ring-shaped end face of a pipe, wherein
- an outer side of the connecting element facing the pipe, to which the connecting element is to be welded, is configured as a contact surface for securing a union nut and wherein
- an outer side (26) of the connecting element facing away from the pipe, to which the connecting element is to be welded, is configured as a conical sealing surface,
**characterized in**
- **that** it has an annular area, referred to in the following as friction area (14), that can be welded by friction welding to the end face and
- **that** the friction area (14) is formed in the interior of the connecting element.

2. A connecting element (10) according to the claim 1, **characterized in that** the friction area (14) upon proper alignment relative to the end face of the pipe, to which the connecting element is to be welded, tapers in the direction toward the end face.

3. A connecting element (10) according to claim 2, **characterized in that** the friction area has two annular lateral flanks (16, 18), which extend at an angle of approximately 90° to 160°, preferably approximately 120°, relative to one another.

4. A connecting element (10) according to claim 2 or 3, **characterized in that** the friction area (14) has a flattened or preferably rounded tip (20).

5. A connecting element (10) according to one of the claims 1 to 4, **characterized in that** in the interior of the connecting element besides the friction area an annular circumferentially extending receptacle (22) is provided for a bead resulting on the outer side of the pipe during friction welding of the connecting element to the pipe.

6. A connecting element (10) according to claim 5, **characterized in that** the maximum outer diameter of the annular circumferentially extending receptacle (22) for the bead is greater than the diameter of a circular receiving opening for the pipe, to which the connecting element is to be welded, formed in the connecting element.

7. A pipe with a connecting element welded thereto according to one of the claims 1 to 6, **characterized in that** the pipe and the connecting element are connected to one another by fiction welding.

8. A pipe connecting comprising at least one pipe with a connecting element welded thereto by friction welding according to one of the claims 1 to 7, a union nut partially surrounding the connecting element and comprising a thread, and a screw fitting having a thread that is complementary to the thread of the union nut.

9. The pipe connection according to claim 8, **characterized in that** the welding seam formed between the pipe and the welded-on connecting element is after proper mounting of the union nut and the screw fitting positioned within the area delimited by the union nut.

10. A high-pressure pipeline comprising a plurality of pipes of which at least one is connected to a connecting element according to one of the claims 1 to 6 by friction welding.

11. A multi-part connecting system for pipes, comprising a connecting element according to one of the claims 1 to 6, a union nut, a screw fitting, and a sealing ring.

12. A multi-part connecting system according to claim 11, additionally comprising a preferably mobile friction welding machine for welding connecting elements to pipes.

13. A method for welding a connection element according to one of the claims 1 to 6 to a circular ring-shaped end face of a pipe, **characterized in that** the connecting element and the pipe are rotated relative to one another about a center axis of the circular ring-shaped end face such that the friction area and the end face rub against one another until they are heated to a temperature required for the welding connection, whereupon the relative rotation of connecting element and pipe relative to one another is stopped and the end face and the friction area are pressed against one another.

14. Use of a friction welding method for welding a connecting element according to one of the claims 1 to 6 to a pipe.

## Revendications

1. Elément de raccordement (10) destiné à être soudé sur une surface frontale en forme d'anneau de cercle d'un tuyau,
- une face extérieure de l'élément de raccordement, qui montre vers le tuyau sur lequel l'élément sera soudé, étant réalisée en tant que surface d'appui destinée à maintenir un écrou-raccord, et
- une face extérieure (26) de l'élément de raccordement, qui montre dans la direction opposée au tuyau sur lequel l'élément sera soudé, étant réalisée comme surface conique d'étanchéité,
**caractérisé par le fait**
- **qu'**il présente une zone annulaire, appelée ci-après zone de friction (14), qui peut être soudée par soudure par friction avec la surface frontale, et
- **que** ladite zone de friction (14) est réalisée à l'intérieur de l'élément de raccordement.

2. Elément de raccordement (10) selon la revendication 1, **caractérisé par le fait que** la zone de friction, lorsqu'elle est orientée - comme destiné - vers la surface frontale du tuyau sur lequel l'élément de raccordement doit être soudé, se rétrécit vers la surface frontale.

3. Elément de raccordement (10) selon la revendication 2, **caractérisé par le fait que** la zone de friction présente deux faces latérales annulaires (16, 18) qui s'étendent l'une par rapport à l'autre à un angle compris environ entre 90 et 160°, de préférence de 120° à peu près.

4. Elément de raccordement (10) selon la revendication 2 ou 3, **caractérisé par le fait que** la zone de friction (14) présente une pointe (20) aplatie ou de préférence arrondie.

5. Elément de raccordement (10) selon l'une des revendications 1 à 4, **caractérisé par le fait que** l'intérieur de l'élément de raccordement présente, outre ladite zone de friction, un logement (22) qui s'étend tout autour en forme d'anneau et qui est destiné à un bourrelet qui, lorsque l'élément de raccordement est soudé par friction sur un tuyau, est né sur la face extérieure du tuyau.

6. Elément de raccordement (10) selon la revendication 5, **caractérisé par le fait que** le diamètre extérieur maximal du logement (22) qui s'étend tout autour en forme d'anneau et qui est destiné au bourrelet, est supérieur au diamètre d'une ouverture circulaire de réception formée dans l'élément de raccordement et destinée à un tuyau sur lequel l'élément de raccordement sera soudé.

7. Tuyau avec un élément de raccordement soudé sur ce premier, selon l'une des revendications 1 à 6, **caractérisé par le fait que** le tuyau et l'élément de raccordement sont reliés entre eux par soudure par friction.

8. Raccord de tuyau comprenant au moins un tuyau avec un élément de raccordement selon l'une des revendications 1 à 6 qui est soudé par friction sur celui-ci, un écrou-raccord avec un filet, ledit écrou-raccord embrassant partiellement l'élément de raccordement, ainsi qu'un manchon fileté présentant un filet qui est complémentaire au filet de l'écrou-raccord.

9. Raccord de tuyau selon la revendication 8, **caractérisé par le fait que**, lorsque ledit écrou-raccord et le manchon fileté sont montés comme destiné, la soudure formée entre le tuyau et l'élément de raccordement soudé sur celui-ci est située dans la zone délimitée par l'écrou-raccord.

10. Tuyauterie à haute pression comprenant un nombre de tuyaux dont un au moins est relié par soudure par friction à un élément de raccordement selon l'une des revendications 1 à 6.

11. Système multiple de connexion pour tuyaux, comprenant un élément de raccordement selon l'une des revendications 1 à 6, un écrou-raccord, un manchon fileté et une bague d'étanchéité.

12. Système multiple de connexion selon la revendication 11, comprenant en sus une machine de soudage par friction qui, de préférence, peut être utilisée de manière mobile et qui est destinée à souder des éléments de raccordement sur des tuyaux.

13. Procédé de soudage d'un élément de raccordement selon l'une des revendications 1 à 6 sur une surface frontale en forme d'anneau de cercle d'un tuyau, **caractérisé par le fait que** l'élément de raccordement et le tuyau sont mis en rotation relative l'un par rapport à l'autre autour de l'axe médian de la surface frontale en forme d'anneau de cercle que la zone de friction et la surface frontale frottent l'une contre l'autre jusqu'à ce qu'elles soient chauffées à la température nécessaire à une jonction par soudure, après quoi la rotation relative l'un par rapport à l'autre de l'élément de raccordement et du tuyau est arrêtée et la surface frontale et la zone de friction sont pressées l'une contre l'autre.

14. Utilisation du procédé de soudage par friction pour souder un élément de raccordement selon l'une des revendications 1 à 6 sur un tuyau.
